# EUROPEAN PATENT SPECIFICATION

(11) **EP 0 736 918 B1**
(45) Date of publication and mention of the grant of the patent: **07.07.1999**
(21) Application number: 96105486.3
(22) Date of filing: 04.04.1996
(51) Int. Cl.: H01M 4/02, H01M 4/04

(54) **Electrode for secondary battery with nonaqueous electrolyte and process for producing the same**
Elektrode für Sekundärbatterie mit nicht-wässrigem Elektrolyten und Verfahren zur Herstellung
Electrode pour accumulateur à électrolyte non-aqueux et procédé de fabrication

(30) Priority: 04.04.1995 JP 10294995
(43) Date of publication of application: 09.10.1996
(73) Proprietor: DAI NIPPON PRINTING CO., LTD., Shinjuku-ku, Tokyo-to (JP); FURUKAWA DENCHI KABUSHIKI KAISHA, Yokohama-shi, Kanagawa-ken (JP)
(72) Inventor: Umeda, Kazuo, c/o Dai Nippon Printing Co., Ltd., Shinjuku-Ku, Tokyo-To (JP); Tsuchiya, Mitsuru, c/o Dai Nippon Printing Co, Ltd, Shinjuku-Ku, Tokyo-To (JP); Sakai, Shigeru, c/o Furukawa Denchi K.K. Iwaki, Iwaki-shi, Fukushima-Ken (JP); Mangahara, Toru, c/o Furukawa Denchi K.K. Iwaki, Iwaki-shi, Fukushima-Ken (JP)
(74) Representative: Müller-Boré & Partner Patentanwälte

(56) References cited:
- EP-A- 0 609 609
- DATABASE WPI Section Ch, Week 7929 Derwent Publications Ltd., London, GB; Class A85, AN 79-53425B XP002009402 & JP-A-54 071 337 (RAY-O-VAC) , 7 June 1979
- PATENT ABSTRACTS OF JAPAN vol. 016, no. 535 (E-1288), 5 November 1992 & JP-A-04 206149 (MATSUSHITA ELECTRIC IND CO LTD), 28 July 1992,
- DATABASE WPI Section Ch, Week 9425 Derwent Publications Ltd., London, GB; Class L03, AN 94-208001 XP002009403 & SU-A-1 809 933 (ELEKTROMOBIL PRODN RES TECHN ENTERPRISE) , 15 April 1993
- PATENT ABSTRACTS OF JAPAN vol. 016, no. 488 (E-1277), 9 October 1992 & JP-A-04 179054 (SANYO ELECTRIC CO LTD), 25 June 1992,

## Description

The present invention relates to an electrode plate, for a secondary battery with a nonaqueous electrolyte, which can enhance the utilization factor of an active material resulting in high battery performance characteristics, and a process for producing the same.

In recent years, a reduction in size and a reduction in weight of electronic equipment and communication equipment, exemplified by 8 mm video cameras for high-discharge purposes, have been rapidly advanced. This advance has required a reduction in size and a reduction in weight of batteries used as a driving power source for these equipment, and, for this purpose, commercialization of secondary batteries having high voltage and high energy density has been strongly demanded in the art.

In this type of batteries, alkaline batteries exemplified by conventional nickel-cadmium batteries and the like are being replaced with secondary batteries with an nonaqueous electrolyte, exemplified by a lithium ion secondary battery, by virtue of properties, specifically higher energy density, higher battery capacity, better storage properties, wider service temperature range and the like.

Regarding electrode plates which greatly influence the performance of the secondary batteries with a nonaqueous electrolyte, methods for reducing the thickness and increasing the area of the electrode plate have been proposed in order to prolong the charge-discharge cycle life and to increase the energy density. For example, Japanese Patent Laid-Open Nos. 10456/1988 and 285262/1991 disclose a process for producing an electrode plate, comprising the steps of: adding a solution of a conductive agent and a binder in a suitable wetting agent (a solvent) to an active material powder, for a positive plate, such as an oxide, a sulfide, a halide or the like of a metal, to prepare a paste; coating the paste on a collector of a metallic foil; and drying the coating. In the preparation of such an electrode for a secondary battery with a nonaqueous electrolyte, fluororesins, such as polytetrafluoroethylene and polyvinylidene fluoride, are generally used as the binder from the viewpoint of ease of handling, such as coatability.

In the electrode plate prepared by the above process, however, the use of the binder is likely to substantially reduce the area of contact between the active material and the electrolyte because the binder unavoidably covers a considerable area of the surface of the active material and the conductive agent. Therefore, the effective reaction area which enables doping and undoping of ions for the active material is reduced, lowering the utilization factor of the whole active material. This makes it impossible to provide high battery performance characteristics.

In view of the above problems, the present invention has been made, and an object of the present invention is to provide an electrode plate, for a secondary battery with a nonaqueous electrolyte, which can enhance the utilization factor of an active material to develop high battery performance characteristics.

In order to attain the above object, the electrode plate for a secondary battery with a nonaqueous electrolyte according to the present invention comprises: a collector; and a coating layer provided on the collector, the coating layer comprising a powdery active material, a conductive agent, and a binder, the powdery active material being constituted by particles with a lamellar structure having lamellar cracks.

The process for producing an electrode plate for a secondary battery with a nonaqueous electrolyte according to the present invention comprises the steps of: mixing a powdery active material, a powdery conductive agent, and a binder with a predetermined solvent to prepare an active material-containing mixture in a slurry form; coating the active material-containing mixture onto a collector; and removing the solvent from the wet coating to form a coating layer of an active material-containing mixture on the collector, wherein the active material is pressed either before the preparation of the active material-containing mixture or after the formation of the coating layer, thereby forming lamellar microcracks in the active material particles.
Fig. 1 is a diagram showing discharge curves for batteries constructed using electrode plates prepared in the examples of the present invention and the comparative example;
Fig. 2 is a diagram showing average discharge capacities of batteries constructed using electrode plates prepared in the same manner as in Example 1, except that three kinds of LiCoO₂ having different average particle diameters are used as an active material;
Fig. 3 is a photomicrograph (magnification: 3000 times) showing a microstructure of an active material prepared in Example 1 of the present invention;
Fig. 4 is a photomicrograph (magnification: 3000 times) showing a microstructure of an active material prepared in Example 3 of the present invention;
Fig. 5 is a photomicrograph (magnification: 3000 times) showing a microstructure of an active material prepared in Example 4 of the present invention;
Fig. 6 is a photomicrograph (magnification: 2000 times) showing a particle structure of an active material prepared in Comparative Example.

The formation of lamellar microcracks in an active material is considered to increase the specific surface area of the active material particles, resulting in markedly increased area of contact of the active material with an electrolyte. Further, this facilitates the penetration of the electrolyte into gaps among microcracks, increasing portions where the active material comes into contact with the electrolyte as a whole. The increased contact area increases the area where an electrochemical reaction which causes doping and undoping of ions for the active material occurs, leading to an improvement in utilization factor of the whole active material and an increase in discharge capacity, resulting in improved performance of the battery.

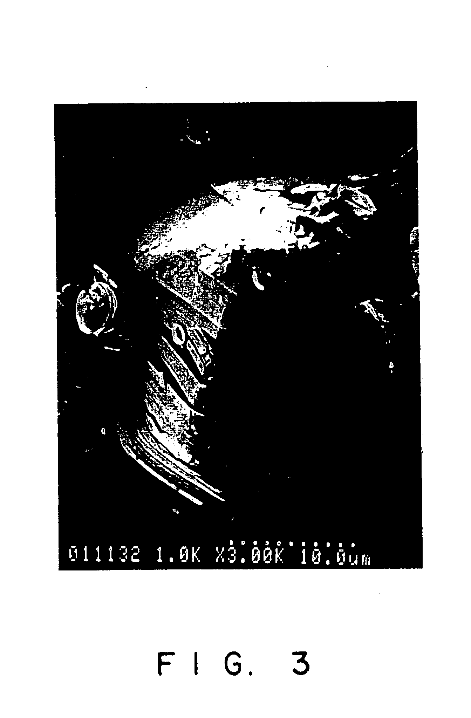

Fig. 3 is a photomicrograph (magnification: 3000 times) showing the structure of a particle of an active material prepared in Example 1 of the present invention, which demonstrates that lamellar microcracks are formed in the active material. The lamellar pattern has such an appearance as found in a wind-wrought pattern on the sands.

As shown in Fig. 3, the active material particles in the present invention have a lamellar structure with lamellar microcracks. In other words, the active material particles in the present invention have a lamellar cleavage structure, and the lamellar microcracks or pattern like a wind-wrought pattern on the sands are considered to be formed by pressing.

Preferable active materials include LiCoO₂ and other lithium compounds, such as LiNiO₂, LiMnO₂, LiMn₂O₄, and LiCo₁₋ₓNiₓO₂ (wherein 0<x<1).

The average particle diameter of the LiCoO₂ powder used as the active material is preferably 1 to 100 µm, more preferably 10 to 60 µm. When it is less than 1 µm, the particles are so fine that it is difficult to form the wind-wrought pattern on the sands or microcracks and, at the same time, the handling of the active material per se becomes difficult. On the other hand, when the average particle diameter exceeds 100 µm, the active material per se is likely to be broken, unfavorably resulting in deteriorated characteristics.

The electrode plate may be produced by the conventional method except for the provision of the step of pressing. In general, an active material, such as a LiCoO₂ powder, a conductive agent, such as a graphite powder, a binder, such as a polyvinylidene fluoride resin, and a predetermined solvent are mixed together, and the mixture is stirred by means of a homogenizer to prepare an active material-containing mixture in a slurry form. Subsequently, the active material-containing mixture is coated on a collector of an aluminum foil or the like by means of a slot die coater, and the wet coating is then dried to remove the solvent, thereby forming a coating layer of an active material-containing mixture on the collector. Water is removed from the coating layer by aging or the like.

The pressing of the active material may be carried out either after the formation of the coating layer or in the stage of a powdery raw material.

Conventional pressing devices, such as a bench press and a roller press, may be used as means for the formation of a lamellar pattern, like a wind-wrought pattern on the sands, or microcracks in the active material particles.

When the pressure for the pressing treatment is less than 500 kgf/cm², the pattern like a wind-wrought pattern on the sands or the microcrack is difficult to be formed, while when it exceeds 7500 kgf/cm², the active material particles are ground or alternatively the electrode plate per se, including the collector substrate, is unfavorably broken. In general, the pressure is preferably in the range of from 500 to 7500 kgf/cm².

In the production of a secondary battery using the electrode plate prepared above, a nonelectrolyte prepared by dissolving a lithium salt as a solute in an organic solvent is preferably used as the electrolyte.

Organic solvents usable herein include cyclic esters, chain esters, cyclic ethers, and chain ethers. Examples of the cyclic esters include propylene carbonate, butylene carbonate, γ-butyrolactone, vinylene carbonate, 2-methyl-γ-butyrolactone, acetyl-γ-butyrolactone, γ-valerolactone; and examples of the chain esters include dimethyl carbonate, diethyl carbonate, dibutyl carbonate, dipropyl carbonate, methyl ethyl carbonate, methyl butyl carbonate, methyl propyl carbonate, ethyl butyl carbonate, ethyl propyl carbonate, butyl propyl carbonate, an alkyl ester of propionic acid, a dialkyl ester of malonic acid, and an alkyl ester of acetic acid; examples of the cyclic ethers include tetrahydrofuran, an alkyl tetrahydrofuran, a dialkyl tetrahydrofuran, an alkoxy tetrahydrofuran, a dialkoxy tetrahydrofuran, 1,3-dioxolane, an alkyl-1,3-dioxolane, and 1,4-dioxolane; and examples of the chain ethers include 1,2-dimethoxyethane, 1,2-diethoxyethane, diethyl ether, an ethylene glycol dialkyl ether, a diethylene glycol dialkyl ether, a triethylene glycol dialkyl ether, and a tetraethylene glycol dialkyl ether.

Lithium salts as the solute include inorganic lithium salts, such as LiClO₄, LiBF₄, LiPF₆, LiAsF₆, LiCl, and LiBr, and organolithium salts, such as LiB(C₆H₅)₄, LiN(SO₂CF₃)₂, LiC(SO₂CF₃)₃, LiOSO₂CF₃, LiOSO₂C₂F₅, LiOSO₂C₃F₇, LiOSO₂C₄F₉, LiOSO₂C₅F₁₁, LiOSO₂C₆F₁₃, and LiOSO₂C₇F₁₅.

The present invention will be described in more detail with reference to the following examples. These examples are presented for illustrative purposes only and are not intended to limit the technical scope of the present invention.

### Example 1

90 parts by weight of a LiCoO₂ powder as an active material, with an average particle diameter of 10 µm, having neither any pattern like a wind-wrought pattern on the sands nor any microcrack, 5.0 parts by weight of a graphite powder as a conductive agent, 5.0 parts by weight of a polyvinylidene fluoride resin (Neoflon VDF VP-850, manufactured by Daikin Industries, Ltd.), and 20 parts by weight of N-methylpyrrolidone were mixed together with stirring by means of a homogenizer at 8000 rpm for 10 min, thereby preparing a mixture, containing an active material for a positive plate, in a slurry form.

The mixture containing an active material for a positive plate was coated on one side of a collector of a 20 µm-thick aluminum foil by means of a slot die coater, and the coating was dried in an oven of 120°C to remove the solvent, thereby forming an 80 µm-thick coating layer of an active material-containing mixture on the collector.

For each collector, the surface of the coating layer, formed of an active material-containing mixture, on the collector was roller-pressed (pressure: 4000 kgf/cm²) to level the coating layer and, at the same time, to form a pattern, like a wind-wrought pattern on the sands, or microcracks in LiCoO₂ per se contained in the coating layer, thereby preparing a contemplated electrode plate for a secondary battery with a nonaqueous electrolyte. A photomicrograph of the active material contained in the pressed coating layer is shown in Fig. 3.

The electrode plate thus obtained was aged in a vacuum oven of 80°C for 48 hr, thereby removing water.

### Example 2

90 parts by weight of a LiCoO₂ powder (average particle diameter: 10 µm) as an active material, which had been previously pressed at 4000 kgf/cm² to form a pattern, like a wind-wrought pattern on the sands, or microcracks in LiCoO₂, 5.0 parts by weight of a graphite powder as a conductive agent, 5.0 parts by weight of a polyvinylidene fluoride resin (Neoflon VDF VP-850, manufactured by Daikin Industries, Ltd.), and 20 parts by weight of N-methylpyrrolidone stirred by means of a homogenizer at 8000 rpm for 10 min, thereby preparing a mixture, containing an active material for a positive plate, in a slurry form.

The mixture containing an active material for a positive plate was coated on one side of a collector of a 20 µm-thick aluminum foil by means of a slot die coater, and the coating was dried in an oven of 120°C to remove the solvent, thereby forming an 80 µm-thick coating layer on the collector.

The electrode plate thus obtained was aged in a vacuum oven of 80°C for 48 hr, thereby removing water.

### Example 3

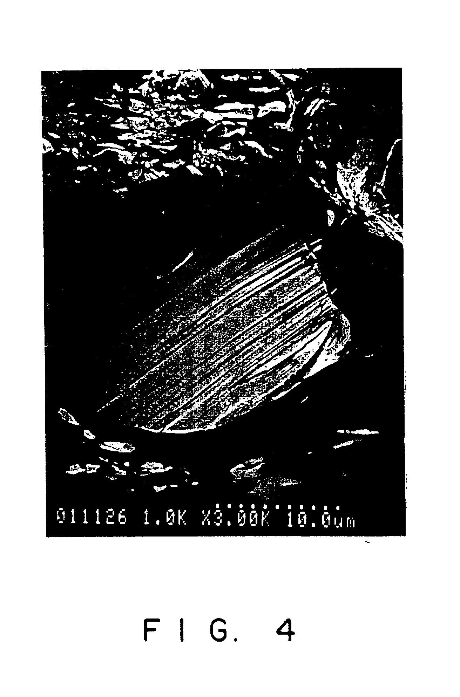

An electrode plate for a secondary battery with a nonaqueous electrolyte was prepared in the same manner as in Example 1, except that the pressing of the coating layer was carried out at 3000 kgf/cm². A photomicrograph of the active material contained in the pressed coating layer is shown in Fig. 4.

The electrode plate thus obtained was aged in a vacuum oven of 80°C for 48 hr, thereby removing water.

### Example 4

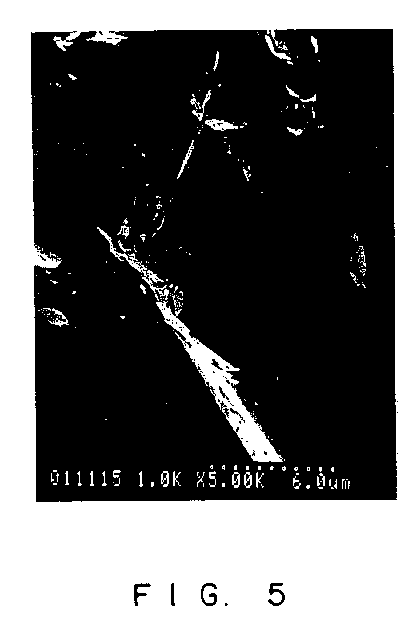

An electrode plate for a secondary battery with a nonaqueous electrolyte was prepared in the same manner as in Example 1, except that the pressing of the coating layer was carried out at 2000 kgf/cm². A photomicrograph of the active material contained in the pressed coating layer is shown in Fig. 5.

The electrode plate thus obtained was aged in a vacuum oven of 80°C for 48 hr, thereby removing water.

### Comparative Example

90 parts by weight of a LiCoO₂ powder, as an active material (average particle diameter: 10 µm), having neither any pattern like a wind wrought pattern on the sands nor any microcrack, 5.0 parts by weight of a graphite powder as a conductive agent, 5.0 parts by weight of a polyvinylidene fluoride resin (Neoflon VDF VP-850, manufactured by Daikin Industries, Ltd.), and 20 parts by weight of N-methylpyrrolidone were stirred by means of a homogenizer at 8000 rpm for 10 min, thereby preparing a mixture, containing an active material for a positive plate, in a slurry form.

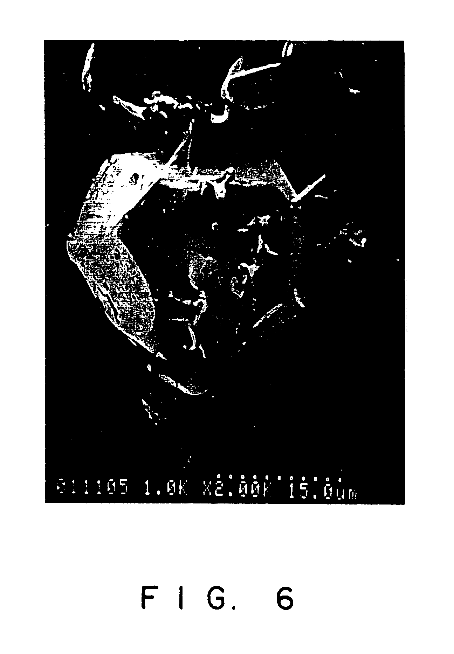

The mixture containing an active material for a positive plate was coated on one side of a collector of a 20 µm-thick aluminum foil by means of a slot die coater, and the coating was dried in an oven of 100°C to remove the solvent, thereby forming an 80 µm-thick coating layer of an active material-containing mixture on the collector. A photomicrograph of the active material contained in the coating layer is shown in Fig. 6.

The electrode plate thus obtained was aged in a vacuum oven of 80°C for 48 hr, thereby removing water.

### (Preparation of Secondary Battery)

Secondary batteries with a nonaqueous electrolyte were constructed using electrode plates, prepared in the above examples and comparative example were used, as a positive electrode in combination with a negative plate.

The negative plate was prepared as follows. 90 parts by weight of a graphite powder, 10 parts by weight of a styrene-butadiene rubber resin, and 30 parts by weight of toluene were mixed together, and the mixture was stirred by means of a homogenizer at 8,000 rpm for 10 min, thereby preparing a mixture, containing an active material for a negative electrode, in a slurry form. The mixture containing an active material for a negative electrode was coated by means of a slot die coater on both sides of a collector of a 10 µm-thick copper foil, and the coating was dried in an oven of 120°C to remove the solvent, thereby forming an 90 µm-thick coating layer, formed of an active material-containing mixture, on the collector. For each collector, the surface of the coating layer, formed of an active material-containing mixture, on the collector was roller-pressed to level the coating layer, thereby preparing a contemplated electrode plate for a secondary battery with a nonaqueous electrolyte. The electrode plate thus obtained was aged in a vacuum oven of 80°C for 72 hr. A separator of a microporous polyolefin (polypropylene, polyethylene, or a copolymer of polypropylene with polyethylene) film, with a three-dimensional hole structure (a spongy structure), having a larger width than the positive and negative plates was interposed between the positive plates prepared in Examples 1 to 4 and Comparative Example and the negative plate prepared just above, and spirally wound to prepare an electrode. The electrode was inserted into a closed-end cylindrical stainless steel container serving also as a terminal, for the negative electrode, to assembly a battery, of size AA, having a rated capacity of 500 mAh.

An electrolyte prepared by dissolving one mol of LiPF₆ as an electrolytic salt in one liter of a mixed solvent prepared by mixing EC (ethylene carbonate), PC (propylene carbonate), and DME (dimethoxyethane) together in a volume ratio of 1 : 1 : 2 was poured into the battery.

### (Measurement of Battery Performance Characteristics)

For battery performance characteristics, charge-discharge characteristics were measured at 25°C on 20 cells per battery using a charge-discharge measuring apparatus by repeating charging and discharging 100 cycles under such conditions that the battery was charged at a maximum current of 0.2 CmA to a battery voltage of 4.1 V, the charging was stopped for 10 min, the battery was discharged at the same current to 2.75 V, and the discharging was stopped for 10 min.

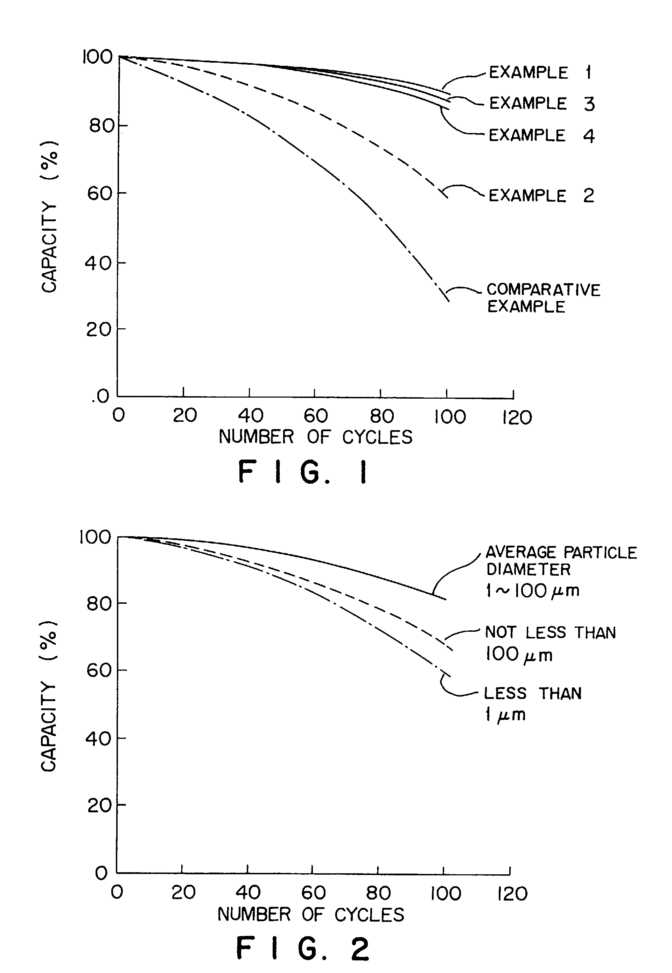

Fig. 1 shows the average discharge capacity for individual batteries, each consisting of 20 cells, constructed using electrode plates prepared in Examples 1 to 4 and Comparative Example. In this case, for each battery, the average value of the initial capacities is taken as 100%. As is apparent from Fig. 1, in discharge curves for batteries constructed using electrode plates prepared in Examples 1 to 4, the average discharge capacity was maintained at not less than about 60% even after the 100th cycle, whereas for Comparative Example, the capacity was remarkably lowered from an early stage with the retention of the capacity after the 100th cycle being only about 30%.

Fig. 2 shows the average discharge capacity of batteries for each cycle by taking the average value of the initial capacities as 100%. In this case, the batteries each consist of 20 cells constructed using electrode plates prepared in the same manner as in Example 1, except that three kinds of LiCoO₂ having different particles diameters were used as the active material.

From Fig. 2, it is apparent that, for a battery using an electrode plate prepared from LiCoO₂ with an average particle diameter of 1 to 100 µm, the retention of the average discharge capacity was not less than about 80% after the 100th cycle, whereas for batteries using electrode plates prepared from LiCoO₂ with an average particle diameter of less than 1 µm and an average particle diameter of not less than 100 µm, the capacity was remarkably lowered in an early stage with the retentions of the capacity after the 100th cycle being respectively about 60% and about 70%.

As described above, the electrode plate for a secondary battery with a nonaqueous electrode according to the present invention comprises a collector having thereon a coating layer containing a powdery active material, a conductive agent, and a binder, wherein the active material has a pattern, like a wind wrought pattern on the sands, or microcracks. This constitution can enhance the utilization factor of the active material resulting in very high battery performance characteristics.

## Claims

1. An electrode plate for a secondary battery with a nonaqueous electrolyte, comprising: a collector; and a coating layer provided on the collector, the coating layer comprising a powdery active material, a conductive agent, and a binder,
the powdery active material being constituted by particles with a lamellar structure having lamellar cracks.

2. The electrode plate according to claim 1, wherein the average diameter of the active material particles is 1 to 100 µm.

3. The electrode plate according to claim 1 or 2, wherein the active material comprises a lithium compound.

4. The electrode plate according to claim 1, 2 or 3, wherein the active material is at least one member selected from the group consisting of LiCoO₂, LiNiO₂, LiMnO₂, LiMn₂O₄, and LiCo₁₋ₓNiₓO₂ (wherein 0<x<1).

5. The electrode plate according to anyone of the preceding claims, wherein the conductive agent is a graphite powder.

6. The electrode plate according to anyone of the preceding claims, wherein the binder is a resin.

7. A process for producing an electrode plate for a secondary battery with a nonaqueous electrolyte, comprising the steps of:
mixing a powdery active material, a powdery conductive agent, and a binder with a predetermined solvent to prepare an active material-containing mixture in a slurry form;
coating the active material-containing mixture onto a collector; and
removing the solvent from the wet coating to form a coating layer of an active material-containing mixture on the collector,
wherein the active material is pressed either before the preparation of the active material-containing mixture or after the formation of the coating layer, thereby forming lamellar microcracks in the active material particles.

8. The process according to claim 7, wherein the active material particles have a lamellar structure and an average diameter of 1 to 100 µm.

9. The process according to claim 7 or 8, wherein the active material comprises a lithium compound.

10. The process according to claim 7, 8 or 9, wherein the active material is at least one lithium compound selected from the group consisting of LiCoO₂, LiNiO₂, LiMnO₂, LiMn₂O₄, and LiCo₁₋ₓNiₓO₂ (wherein 0<x<1).

11. The process according to anyone of claims 7 to 10, wherein the conductive agent is a graphite powder.

12. The process according to anyone of claims 7 to 11, wherein the binder is a resin.

13. The process according to anyone of claims 7 to 12, wherein the pressing is carried out at a pressure of 500 to 7500 kgf/cm².

## Patentansprüche

1. Elektrodenblech für einen Akkumulator mit einem nicht-wäßrigen Elektrolyten, umfassend:
einen Kollektor und eine Beschichtungsschicht, die auf dem Kollektor angeordnet ist, wobei die Beschichtungsschicht ein pulverförmiges aktives Material, ein leitendes Mittel und ein Bindemittel umfaßt, wobei das pulverförmige aktive Material durch Teilchen mit einer lamellaren Struktur, die lamellare Risse aufweist, gebildet wird.

2. Elektrodenblech nach Anspruch 1, wobei der durchschnittliche Durchmesser der Teilchen des aktiven Materials 1 bis 100 µm beträgt.

3. Elektrodenblech nach Anspruch 1 oder 2, wobei das aktive Material eine Lithiumverbindung umfaßt.

4. Elektrodenblech nach Anspruch 1, 2 oder 3, wobei das aktive Material mindestens ein Mitglied ist, ausgewählt aus der Gruppe, bestehend aus LiCoO₂, LiNiO₂, LiMnO₂, LiMn₂O₄ und LiCo₁₋ₓNiₓO₂ (worin 0<x<1).

5. Elektrodenblech nach einem der vorhergehenden Ansprüche, wobei das leitende Mittel ein Graphitpulver ist.

6. Elektrodenblech nach einem der vorhergehenden Ansprüche, wobei das Bindemittel ein Harz ist.

7. Verfahren zur Herstellung eines Elektrodenblechs für einen Akkumulator mit einem nicht-wäßrigen Elektrolyten, umfassend die Schritte
des Mischens eines pulverförmigen aktiven Materials, eines pulverförmigen leitenden Mittels und eines Bindemittels mit einem vorbestimmten Lösungsmittel zur Herstellung eines das aktive Material enthaltenden Gemisches in der Form einer Aufschlämmung,
des Beschichtens des das aktive Material enthaltenden Gemisches auf einen Kollektor, und
des Entfernens des Lösungsmittels von der naßen Beschichtung unter Bildung einer Beschichtungsschicht eines das aktive Material enthaltenden Gemisches auf den Kollektor,
wobei das aktive Material entweder vor der Herstellung des das aktive Material enthaltenden Gemisches oder nach der Bildung der Beschichtungsschicht gepreßt wird, wodurch lamellare Mikrorisse in den Teilchen des aktiven Materials gebildet werden.

8. Verfahren nach Anspruch 7, wobei die Teilchen des aktiven Materials eine lamellare Struktur und einen durchschnittlichen Durchmesser von 1 bis 100 µm aufweisen.

9. Verfahren nach Anspruch 7 oder 8, wobei das aktive Material eine Lithiumverbindung umfaßt.

10. Verfahren nach Anspruch 7, 8 oder 9, wobei das aktive Material mindestens eine Lithiumverbindung ist, ausgewählt aus der Gruppe, bestehend aus LiCoO₂, LiNiO₂, LiMnO₂, LiMn₂O₄ und LiCo₁₋ₓNiₓO₂ (worin 0<x<1).

11. Verfahren nach einem der Ansprüche 7 bis 10, wobei das leitende Mittel ein Graphitpulver ist.

12. Verfahren nach einem der Ansprüche 7 bis 11, wobei das Bindemittel ein Harz ist.

13. Verfahren nach einem der Ansprüche 7 bis 12, wobei das Pressen bei einem Druck von 500 bis 7500 kgf/cm² durchgeführt wird.

## Revendications

1. Plaque d'électrodes pour un accumulateur ayant un électrolyte non-aqueux, comprenant: un collecteur; et une couche de revêtement fournie sur le collecteur, la couche de revêtement comprenant une matière active en poudre, un agent conducteur et un liant,
la matière active en poudre étant constituée par des particules avec une structure lamellaire ayant des fissures lamellaires.

2. Plaque d'électrodes selon la revendication 1, dans laquelle le diamètre moyen des particules de matière active est de 1 à 100 µm.

3. Plaque d'électrodes selon la revendication 1 ou 2, dans laquelle la matière active comprend un composé du lithium.

4. Plaque d'électrodes selon la revendication 1, 2 ou 3, dans laquelle la matière active est au moins un élément choisi dans le groupe formé par LiCoO₂, LiNiO₂, LiMnO₂, LiMn₂O₄ et LiCo₁₋ₓNiₓO₂ (dans lequel 0<x<1).

5. Plaque d'électrodes selon l'une quelconque des revendications précédentes, dans laquelle l'agent conducteur est une poudre de graphite.

6. Plaque d'électrodes selon l'une quelconque des revendications précédentes, dans laquelle le liant est une résine.

7. Procédé pour produire une plaque d'électrodes pour un accumulateur ayant un électrolyte non-aqueux, comprenant les étapes consistant:
à mélanger une matière active en poudre, un agent conducteur en poudre et un liant avec un solvant prédéterminé afin de préparer un mélange contenant une matière active sous forme de pâte;
à déposer le mélange contenant la matière active sur un collecteur; et
à éliminer le solvant du revêtement mouillé afin de former une couche de revêtement d'un mélange contenant une matière active sur le collecteur,
dans lequel la matière active est pressée soit avant la préparation du mélange contenant la matière active soit après la formation de la couche de revêtement, formant ainsi des microfissures lamellaires dans les particules de matière active.

8. Procédé selon la revendication 7, dans lequel les particules de matière active possèdent une structure lamellaire et un diamètre moyen de 1 à 100 µm.

9. Procédé selon la revendication 7 ou 8, dans lequel la matière active comprend un composé du lithium.

10. Procédé selon la revendication 7, 8 ou 9, dans lequel la matière active est au moins un composé du lithium choisi dans le groupe formé par LiCoO₂, LiNiO₂, LiMnO₂, LiMn₂O₄, et LiCo₁₋ₓNiₓO₂ (dans lequel 0<x<1).

11. Procédé selon l'une quelconque des revendications 7 à 10, dans lequel l'agent conducteur est une poudre de graphite.

12. Procédé selon l'une quelconque des revendications 7 à 11, dans lequel le liant est une résine.

13. Procédé selon l'une quelconque des revendications 7 à 12, dans lequel le pressage s'effectue à une pression de 500 à 7 500 kg/cm².
